# FASCICULE DE BREVET EUROPEEN

(11) **EP 1 383 336 B1**
(45) Date de publication et mention de la délivrance du brevet: **04.05.2016**
(21) Numéro de dépôt: 03364015.2
(22) Date de dépôt: 07.07.2003
(51) Int. Cl.: H04N 21/43, H04N 21/44

(54) **Procédé de décompression et de restitution d'un flux de données multimédia numériques compressées comprenant une pluralité d'entités encodées. Dispositif, système et signal correspondants**
Dekompressions und Wiedergabemethode für objektbasierte Multimediadatenströme; entsprechender Apparat und entsprechendes System sowie Signal
Decompression and rendering method for object-based multimedia datastreams. Corresponding apparatus, system and signal

(30) Priorité: 08.07.2002 FR 0208587
(43) Date de publication de la demande: 21.01.2004
(73) Titulaire: Orange, 75015 Paris (FR)
(72) Inventeur: Gegout, Cédric, 35000 Rennes (FR); Picaud, Michael, 35830 Betton (FR)
(74) Mandataire: Vidon Brevets & Stratégie

(56) Documents cités:
- EP-A- 0 919 953
- EP-A- 1 133 189
- US-A1- 2001 000 962
- FUKUNAGA S ET AL: "MPEG-4 VIDEO VERIFICATION MODEL VERSION 16.0" INTERNATIONAL ORGANIZATION FOR STANDARDIZATION - ORGANISATION INTERNATIONALE DE NORMALISATION, vol. N3312, mars 2000 (2000-03), pages 1-380, XP000861688
- SENOH T ET AL: "MULTIMEDIA TECHNOLOGY TREND IN MPEG4" IEICE TRANSACTIONS ON ELECTRONICS, INSTITUTE OF ELECTRONICS INFORMATION AND COMM. ENG. TOKYO, JP, vol. E81-C, no. 5, mai 1998 (1998-05), pages 642-649, XP000834530 ISSN: 0916-8524
- RAMASWAMY A: "A standard target decoder model for MPEG-4 FlexMux streams", PROCEEDINGS OF THE 1999 IEEE INTERNATIONAL SYMPOSIUM ON CIRCUITS AND SYSTEMS / ISCAS '99, MAY 30 - JUNE 2, 1999, ORLANDO, FLORIDA, IEEE SERVICE CENTER, PISCATAWAY, NJ, vol. 4, 30 May 1999 (1999-05-30), pages 455-458, XP010341257, DOI: 10.1109/ISCAS.1999.780040 ISBN: 978-0-7803-5471-5

## Description

Le domaine de l'invention est celui de la restitution sur un terminal client d'un flux multimédia, représentatif par exemple d'une scène graphique animée en deux ou trois dimensions, d'un signal audio ou vidéo, etc. Plus précisément, l'invention concerne une technique de décodage d'un tel flux, en vue de sa restitution sur le terminal.

De tels flux multimédia sont généralement agencés sous forme d'une succession d'unités autonomes codées référencées par une estampille temporelle unique, qui a pour vocation de renseigner le terminal récepteur sur l'instant auquel doivent avoir lieu l'interprétation et la restitution du signal reçu. Par interprétation d'une unité autonome, on entend généralement le calcul de la structure à restituer à partir, d'une part, d'informations contenues dans cette unité autonome, et, d'autre part, d'informations détenues par le dispositif de restitution. Par restitution, on entend classiquement l'affichage, la présentation visuelle, sonore ou sensitive à l'utilisateur. La restitution du signal multimédia par le terminal nécessite par ailleurs le décodage des unités autonomes, reçues depuis un serveur ou un terminal émetteur sous forme codée.

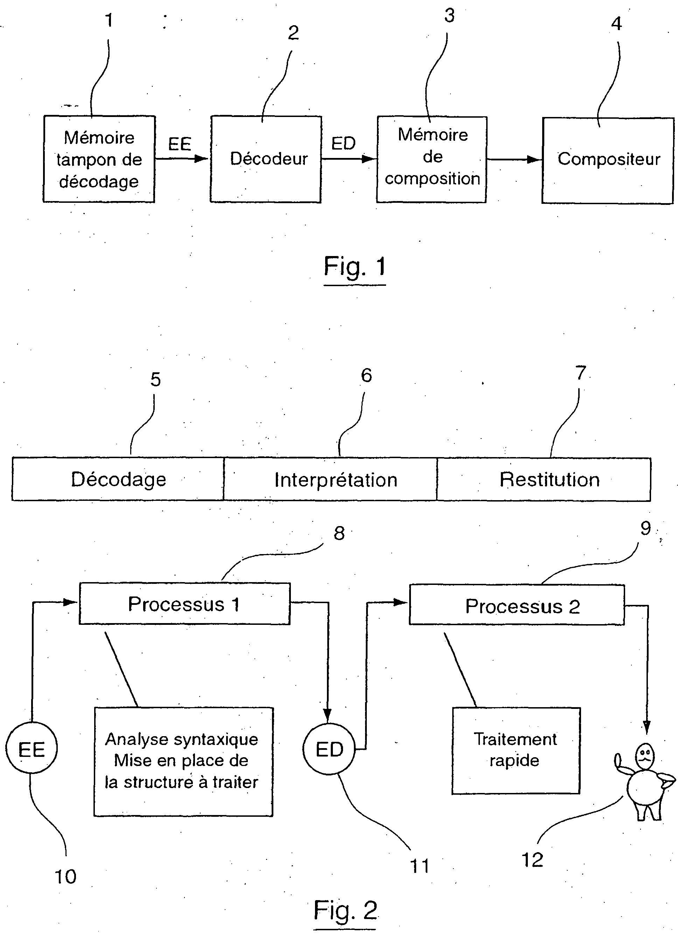

La partie Systèmes du standard MPEG-4 (en anglais "Moving Picture Coding Experts Group", en français "Groupe d'experts pour le codage d'images animées") (ISO-IEC/14496-1) définit un modèle de décodage, basé sur l'estampillage temporelle des trames encodées. La chaîne de décodage et de restitution mise en oeuvre selon ce standard est illustrée en figure 1 ; elle présente succinctement le fonctionnement des modules logiciels d'un outil de visualisation ou de rendu, mis en oeuvre pour décoder le flux multimédia, puis composer le signal ainsi décodé.

A la réception, les différents flux multimédia sont stockés dans une mémoire tampon de décodage 1, et les différentes entités encodées (encore appelées EE) qui les constituent alimentent un décodeur 2, qui délivre des entités décodées (encore appelées ED). Ces entités décodées sont stockées dans une mémoire de composition 3, puis restituées sur le terminal client par le module en charge de la composition, encore appelé compositeur 4.

Le traitement mis en oeuvre par le terminal client sur réception d'un flux multimédia comprend donc essentiellement deux phases, une première phase de décodage des entités encodées EE et une deuxième phase de composition des entités décodées ED.

L'estampille temporelle associée à chacune des entités autonomes du flux, appelée Estampille Temporelle de Composition dans le standard MPEG-4 et Estampille Temporelle de Présentation au sein du standard MPEG-2, et que nous appellerons plus généralement estampille de composition, ou ETC, dans la suite du document, indique l'instant auquel les données du flux doivent être restituées (sous forme visuelle, sonore, etc.) par le terminal à l'utilisateur.

Dans la plupart des techniques connues, le décodage et la composition des trames sont mis en oeuvre à l'instant indiqué par l'ETC, de sorte qu'il est artificiellement considéré que le temps de décodage des EE est nul. Or, pour les flux complexes notamment, le temps de décodage n'est pas toujours négligeable, et l'entité décodée ED n'est pas toujours disponible suffisamment tôt pour que le compositeur 4 la restitue à l'instant défini par son ETC. Le processus de rendu s'en trouve donc retardé.

En effet, lorsque les flux multimédia considérés sont des flux complexes, ou particulièrement volumineux, leur décodage peut s'avérer lourd, et particulièrement long à implémenter.

On assiste ainsi à une désynchronisation de la restitution des différentes trames, entraînant par exemple une visualisation hachée de la scène graphique dans le cas de flux vidéo. Lorsque différentes chaînes de décodage sont utilisées en parallèle, pour assurer par exemple le rendu simultané d'un signal représentatif d'une scène graphique animée, et d'un signal audio, le retard au décodage de la scène graphique peut provoquer une désynchronisation du son et de l'image.

Ceci n'est bien sûr pas acceptable, et peut s'avérer particulièrement désagréable pour l'utilisateur.

Selon certaines techniques particulières, une estampille temporelle spécifique, appelée estampille temporelle de décodage, ou ETD, est parfois associée aux entités du flux, pour indiquer à quel instant le décodeur 2 doit décompresser la trame encodée EE ou pour indiquer que l'ordre de décodage des EE est différent de l'ordre de composition indiqué par celui des ETC croissants.

Mais, à nouveau, cette technique est peu adaptée au traitement des flux complexes, pour lesquels la phase d'interprétation est longue et coûteuse, et retarde donc l'instant de restitution de la trame par rapport à l'ETC, ce qui entraîne une désynchronisation de la restitution des différentes trames.

Pour accroître la fluidité de la restitution, et utiliser au mieux les ressources des outils de visualisation, ou plus généralement de rendu, il a été envisagé, selon certaines des techniques connues, et notamment pour la restitution des flux de description de scènes tels que MPEG-4BIFS ou des nouveaux flux vidéo comme MPEG-4 Visual (ISO-IEC/14496-2) ou H26L (ISO-IEC/14496-10), de décorréler temporellement la phase de décodage de la phase de restitution du signal. Le décodage fonctionne alors en mode asynchrone par rapport au rendu du signal, afin de profiter au maximum des ressources de calcul et mémoire disponibles sur le terminal. Le processus de composition doit quant à lui fonctionner en mode synchrone par rapport au rendu du signal, et, de sa rapidité d'exécution, dépend la fluidité de restitution du signal. Une telle technique est décrite dans la demande US 2001/00962 publiée le 10 mai 2001.

Cependant, même si les techniques de décodage et de restitution les plus avancées tentent d'utiliser cette approche au maximum afin de rendre la restitution la plus fluide possible, elles restent cantonnées aux traitements de flux standards et s'avèrent peu efficaces avec l'avènement de flux plus complexes.

Les inventeurs de la présente demande de brevet ont analysé ces différentes techniques connues, et ont identifié le problème suivant : afin de simplifier au maximum l'implantation de décodeurs audio ou vidéo, ces différentes techniques considèrent généralement que les procédures de décodage et de composition sont relativement indépendantes et que l'entité décodée ED se suffit à elle-même pour sa composition. Le compositeur 4 dépend alors fortement du système opérationnel sur lequel est implanté l'outil de rendu (ou "player") et peu de la spécificité du codage.

Selon les inventeurs de la présente demande de brevet, cette approche n'est cependant plus suffisante lorsque l'on traite des flux complexes, comme les flux de description de scène BIFS (ce format est notamment présenté dans "the MPEG-4 Systems Vérification Model", ISO/IEC JTC1/SC29/WG 11-N1693, MPEG 97, avril 1997), de méta-données MPEG-7 ou les nouveaux types de flux vidéo comme H26L (ISO-IEC/14496-10).

L'invention a notamment pour objectif de pallier les différents inconvénients de l'art antérieur mentionnés précédemment, à la lumière notamment du problème identifié par les inventeurs.

Plus précisément, un objectif de l'invention est de fournir une technique de restitution d'un flux ou d'une pluralité de flux multimédia qui assure un rendu fluide, quelle que soit la complexité du ou des flux considéré(s).

Un autre objectif de l'invention est de mettre en oeuvre une telle technique de restitution, reposant sur un décodage optimisé des signaux reçus.

L'invention a également pour objectif de fournir une telle technique de restitution qui permette d'utiliser au mieux les ressources de mémoire et de calcul des terminaux de restitution.

L'invention a encore pour objectif de mettre en oeuvre une telle technique de restitution qui soit compatible avec les techniques de décodage de l'art antérieur.

Encore un objectif de l'invention est de proposer une telle technique de restitution qui n'induise pas un surcoût important en termes de ressources, et notamment de ressources mémoire, par rapport aux techniques de restitution de l'art antérieur.

Ces objectifs, ainsi que d'autres qui apparaîtront par la suite, sont atteints à l'aide d'un procédé de restitution, sur au moins un terminal client, d'au moins un flux de données comprenant une pluralité d'entités encodées, associées chacune à au moins une estampille temporelle de composition, ledit procédé comprenant des étapes de :
- décodage dudit ou desdits flux, de façon à obtenir au moins un flux décodé comprenant une pluralité d'entités décodées ;
- composition desdites entités décodées, aux instants définis par lesdites estampilles temporelles de composition.

Selon l'invention, pour l'une au moins desdites entités encodées, ladite étape de décodage est anticipée par rapport à ladite estampille temporelle de composition, si un contexte de composition associé à ladite entité encodée vérifie au moins un critère prédéterminé.

Ainsi, l'invention repose sur une approche tout à fait nouvelle et inventive de la restitution de flux multimédia, qui est particulièrement bien adaptée au traitement de flux complexes, tels que les flux de description de scènes tels que MPEG-4BIFS ou les nouveaux flux vidéo comme MPEG-4 Visual (ISO-IEC/14496-2) ou H26L (ISO-IEC/14496-10).

En effet, l'invention propose d'anticiper le décodage des signaux reçus, par rapport à leur estampille temporelle de composition, en tenant compte du contexte de composition, ce qui n'avait jamais été envisagé selon les techniques de l'art antérieur.

Par décodage, on entend donc ici la phase de décodage proprement dite, mais également éventuellement une phase de pré-interprétation, permettant le calcul au moins partiel de la structure à restituer associée à l'entité décodée.

De cette façon, pour toutes les entités décodées par anticipation, on garantit une restitution fluide à l'instant indiqué par l'estampille de composition, et on réduit ainsi fortement les risques de désynchronisation des différentes trames à restituer. En outre, l'invention permet d'optimiser les ressources de décodage des dispositifs de restitution : en effet, elle permet d'utiliser de façon optimale les ressources de calcul des plate-formes "multi-threadées" (c'est-à-dire des plate-formes permettant le lancement de plusieurs tâches logicielles en parallèle), ce qui est essentiel dans le cas du traitement de signaux graphiques pour lesquels on doit répondre à des contraintes de fluidité. L'invention permet donc d'optimiser le décodage, puisque le dispositif de restitution, parallèlement à l'interprétation et à la restitution des entités décodées, anticipe le décodage des entités encodées déjà reçues.

L'anticipation du décodage proposée par l'invention étant dépendante du contexte de composition de l'entité encodée considérée, on résout le problème identifié par les inventeurs de la présente demande relatif au postulat d'indépendance des phases de décodage et de composition des flux multimédia, jusqu'à ce jour considéré comme impératif dans les techniques de rendu des signaux de description de scène BIEFS, de méta-données MPEG-7 ou des nouveaux types de flux vidéo comme H26L (ISO-IEC/14496-10) par exemple.

Avantageusement, un tel procédé de restitution met en oeuvre une étape de comparaison d'un contexte de composition courant et dudit contexte de composition associé à ladite entité encodée, et ladite étape de décodage est anticipée lorsque ladite comparaison est positive.

Ainsi, l'étape de décodage est anticipée lorsque le contexte de composition courant est identique au contexte de composition associé à l'entité encodée considérée. En effet, une comparaison positive indique que le résultat du décodage anticipé de l'entité encodée pourra être utilisé lors de la phase de composition, sous réserve d'une éventuelle modification du contexte de composition courant avant la mise en oeuvre de cette phase.

De manière avantageuse, lesdites entités décodées par anticipation sont mémorisées par ledit terminal client jusqu'à ladite étape de composition.

Préférentiellement, en cas de comparaison négative, ladite entité encodée est mémorisée dans ledit terminal client, et ladite étape de décodage est mise en oeuvre audit instant défini par ladite estampille temporelle de composition associée.

Ainsi, si le contexte de composition courant diffère du contexte de composition associé à l'entité encodée, on n'anticipe pas son décodage, qui est classiquement effectué lors de la phase de composition de cette entité.

De manière préférentielle, pour au moins certaines desdites entités décodées par anticipation, on réitère ladite étape de comparaison, préalablement à ladite étape de composition, et ladite étape de composition est mise en oeuvre lorsque ladite deuxième comparaison est positive.

On vérifie ainsi que le contexte de composition courant n'a pas changé depuis le décodage anticipé de l'entité encodée, et que le résultat de ce décodage anticipé peut être utilisé lors de l'étape de composition. L'étape de composition n'est mise en oeuvre, pour l'entité décodée par anticipation, que si le contexte de composition courant est encore identique au contexte de composition associé à l'entité considérée.

Préférentiellement, lorsque ladite deuxième comparaison est négative, ledit procédé met en oeuvre une étape de gestion d'erreurs.

En effet, une comparaison négative indique que le contexte de composition courant a changé depuis le décodage anticipé de l'entité encodée, et que la composition de l'entité, décodée par anticipation, est impossible compte tenu de ce contexte courant. La gestion d'erreurs mise en oeuvre dans ce cas est de type classique, et ne sera donc pas décrite plus en détail dans ce document.

Avantageusement, une information d'ordre de décodage est en outre associée à au moins certaines desdites entités encodées.

Il se peut en effet que l'ordre de décodage des entités encodées diffère de leur ordre de composition : c'est le cas notamment lorsque certaines entités encodées volumineuses ou complexes nécessitent un temps de décodage plus important. Elles sont alors décodées préalablement aux entités encodées mois complexes, de façon à garantir leur disponibilité sous forme décodée à l'instant indiqué par l'estampille temporelle de composition.

Dans un mode de réalisation préféré de l'invention, ladite information d'ordre de décodage est une estampille temporelle de décodage.

De manière préférentielle, ledit flux de données appartient au groupe comprenant :
- les flux vidéo ;
- les flux de description d'une scène graphique à au moins deux dimensions ;
- les flux audio ;
- les flux de description d'un objet à au moins deux dimensions ;
- les flux d'animation d'au moins un objet ;
- les flux de description de méta-données.

Préférentiellement, le format desdites entités encodées appartient au groupe comprenant :
- les formats de média MPEG ;
- les formats de description de données MPEG-7 ;
- les formats de description de scène BIFS ;
- les formats H26L.

L'invention concerne aussi un dispositif de restitution d'au moins un flux de données comprenant une pluralité d'entités encodées, associées chacune à au moins une estampille temporelle de composition, ledit dispositif comprenant :
- des moyens de décodage dudit ou desdits flux, permettant d'obtenir au moins un flux décodé comprenant une pluralité d'entités décodées ;
- des moyens de composition desdites entités décodées, mis en oeuvre aux instants définis par lesdites estampilles temporelles de composition.

Selon l'invention, pour l'une au moins desdites entités encodées, lesdits moyens de décodage sont activés préalablement à ladite estampille temporelle de composition, si un contexte de composition associé à ladite entité encodée vérifie au moins un critère prédéterminé.

Avantageusement, un tel dispositif comprend en outre :
- une mémoire tampon de décodage, dans laquelle lesdites entités encodées sont stockées en ordre croissant de décodage ;
- une mémoire tampon de composition, dans laquelle sont mémorisées lesdites entités décodées.

Selon une première variante de réalisation avantageuse de l'invention, lesdites entités décodées sont mémorisées dans ladite mémoire tampon de composition en ordre croissant d'estampille temporelle de composition.

Lors de l'étape de composition, les entités décodées sont donc traitées dans l'ordre dans lequel elles sont rangées dans la mémoire tampon de composition, et ce sont les moyens de décodage qui assurent le tri des entités décodées en fonction de leur estampille temporelle de composition, de façon à les ordonner dans la mémoire tampon de composition.

Selon une deuxième variante de réalisation avantageuse de l'invention, lesdites entités décodées sont mémorisées dans ladite mémoire tampon de composition en ordre croissant de décodage.

Ainsi, les moyens de décodage agencent les entités dans la mémoire tampon de composition dans l'ordre dans lequel elles ont été décodées, et ce sont les moyens de composition qui effectuent un tri des entités décodées, au sein de la mémoire tampon de composition, de façon à les traiter dans l'ordre croissant de leur estampille temporelle de composition.

L'invention concerne encore un système de transmission d'au moins un flux de données d'un serveur de données vers au moins un terminal client, ledit serveur comprenant des moyens de codage dudit flux de données, sous la forme d'une pluralité d'entités encodées, associées chacune à au moins une estampille temporelle de composition,
ledit terminal client comprenant :
- des moyens de décodage dudit ou desdits flux, permettant d'obtenir au moins un flux décodé comprenant une pluralité d'entités décodées ;
- des moyens de composition desdites entités décodées, mis en oeuvre aux instants-définis par lesdites estampilles temporelles de composition.

Selon l'invention, pour l'une au moins desdites entités encodées, lesdits moyens de décodage sont activés préalablement à ladite estampille temporelle de composition, si un contexte de composition associé à ladite entité encodée vérifie au moins un critère prédéterminé.

L'invention concerne aussi un signal représentatif d'un flux de données destiné à être restitué par au moins un dispositif de restitution tel que décrit précédemment, ledit signal étant disponible en sortie desdits moyens de décodage et alimentant lesdits moyens de composition dudit dispositif.

Selon l'invention, un tel signal comprend une pluralité d'entités dudit flux, comprenant chacune :
- une estampille temporelle de composition ;
- un marqueur *isdecod,* indiquant si ladite entité a été décodée de manière anticipée ;
et, lorsque ledit marqueur *isdecod* prend une première valeur, ladite entité est sous forme encodée et, lorsque ledit marqueur *isdecod* prend une seconde valeur, ladite entité est sous forme décodée et comprend en outre :
- des informations, appelées *presStruct,* relatives à une structure de restitution de ladite entité ;
- des informations, appelées *decodInfo,* relatives au décodage de ladite entité.

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1, déjà présentée précédemment, présente un synoptique d'une chaîne de traitement d'un flux multimédia dans un terminal de restitution ;
- la figure 2 illustre sous forme schématique les différentes phases de traitement mises en oeuvre selon l'invention ;
- la figure 3 présente un synoptique d'un dispositif de restitution mettant en oeuvre une anticipation du décodage selon l'invention ;
- la figure 4 détaille le processus de décodage implémenté par le dispositif de la figure 3 ;
- la figure 5 décrit le processus de composition implémenté selon l'invention par le dispositif de la figure 3.

Le principe général de l'invention repose sur l'anticipation du décodage de certaines entités encodées du flux multimédia, en fonction du contexte de composition qui leur est associé.

On présente, en relation avec la figure 2, un mode de réalisation des différentes phases de traitement de l'invention.

Comme mentionné précédemment, une entité encodée EE 10 est reçue par un terminal de visualisation ou plus généralement de rendu, qui doit lui faire subir des phases successives de décodage 5, d'interprétation 6, de restitution 7, de façon à permettre son affichage 12 à l'écran, dans le cas où cette EE 10 est issue d'un flux vidéo.

Un premier processus référencé 8 comprend les phases de décodage 5 et une phase de pré-interprétation 6, qui permet, à partir de l'EE 10, de produire une entité décodée correspondante 11, mémorisée par le terminal de visualisation jusqu'à sa restitution 12. Ce premier processus 8 a pour objectif de générer une entité, associée à une estampille temporelle de composition ETC, qui soit facile à analyser syntaxiquement, et qui contienne l'ensemble des informations nécessaires au compositeur 4 pour restituer le signal à l'instant t=ETC : cette entité est ici appelée entité décodée ED 11.

Un second processus référencé 9 comprend une phase de post-interprétation de l'entité décodée ED 11 et la phase de restitution 7 elle-même. Ce second processus 9 a pour objectif de restituer l'entité décodée 11 le plus rapidement possible, de façon à respecter les contraintes temporelles de restitution imposées par l'ETC de la trame.

Selon l'invention, le premier processus référencé 8 est avantageusement désynchronisé par rapport au second processus 9, de façon à permettre une anticipation du décodage par rapport à l'ETC de la trame, et garantir ainsi une restitution rapide et fluide du signal à l'utilisateur.

Deux variantes de réalisation de l'invention peuvent notamment être envisagées, et seront donc étudiées successivement dans la suite du document.

Selon une première variante de réalisation, l'ordre de décodage des entités encodées 10 est identique à l'ordre de composition des entités décodées 11, indiqué par l'estampille temporelle de composition ETC.

Selon une seconde variante de réalisation, l'ordre de décodage des entités encodées EE 10 diffère de l'ordre indiqué par les ETC, par exemple si certaines entités plus complexes nécessitent un temps de décodage plus long, et doivent donc de ce fait être décodées en priorité. Selon cette seconde variante, une information indiquant l'ordre de décodage doit être associée aux entités encodées EE 10, par exemple sous la forme d'une estampille temporelle de décodage ETD.

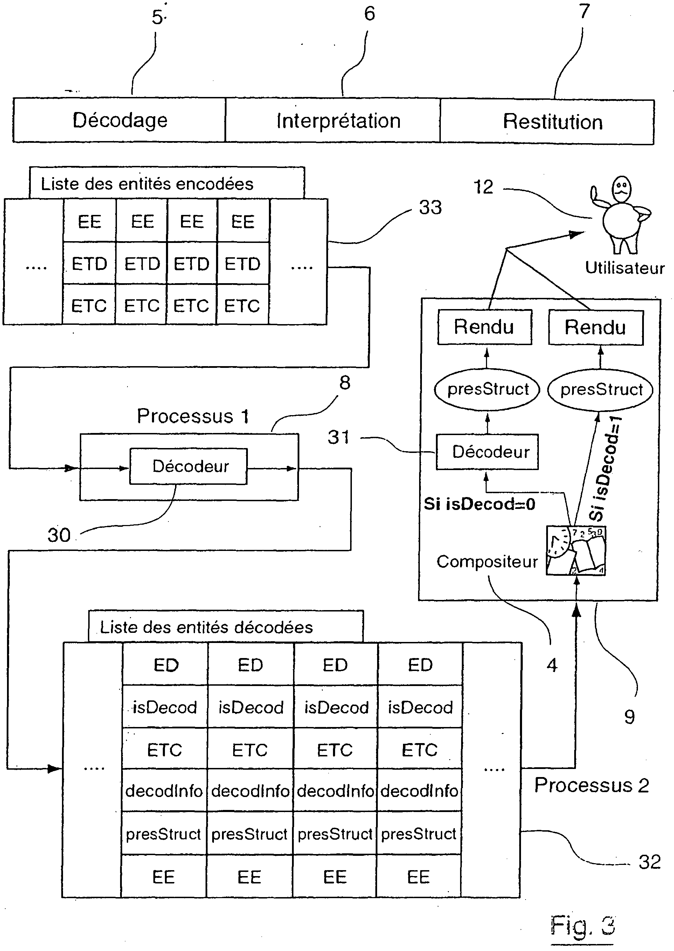

On présente tout d'abord, en relation avec les figures 3 à 5, la première variante de réalisation dans laquelle l'ordre de décodage et l'ordre de composition sont identiques.

Le dispositif de l'invention représenté en figure 3 comprend alors deux décodeurs du signal 30, 31, mis en oeuvre respectivement par chacun des processus référencés 8 et 9 de la figure 2.

Comme indiqué précédemment, le premier processus référencé 8 fonctionne indépendamment, et en mode asynchrone, par rapport au second processus référencé 9. Ce dernier effectue la restitution 7 du signal reçu par le dispositif, et opère donc en mode synchrone par rapport au temps du signal.

Les deux processus référencés 8 et 9 utilisent une même mémoire tampon référencée 32, qui contient l'ensemble des entités décodées ED 11. Dans la suite, on appellera cette mémoire tampon 32, mémoire tampon de composition. Les entités décodées sont stockées dans la mémoire tampon de composition dans l'ordre croissant de leur estampille temporelle de composition ETC, qui correspond également à leur ordre de décodage par le décodeur 30.

Les entités encodées EE 10 sont quant à elles reçues de la source émettrice du signal encodé (par exemple un serveur de flux audio ou vidéo), et sont stockées dans l'ordre croissant de leur ETC dans une mémoire tampon référencée 33, appelée mémoire tampon de décodage.

Comme représenté schématiquement dans la mémoire tampon de décodage 33 de la figure 3, chaque entité encodée EE 10 est associée à une estampille temporelle de composition ETC, et éventuelleriient, dans la seconde variante de réalisation qui sera étudiée ultérieurement dans ce document, à une estampille temporelle de décodage ETD.

Chaque entité décodée ED 11 stockée dans la mémoire tampon de composition 32 est quant à elle associée aux informations suivantes :
- une estampille temporelle de composition ETC indiquant au dispositif de la figure 3 l'instant auquel cette entité ED 11 doit être restituée 12 à l'utilisateur ;
- des informations, appelées *decodInfo,* qui ne sont pas contenues dans l'EE 10, mais qui ont été nécessaires lors de son décodage, permettant la création de l'entité décodée ED 11 ;
- un marqueur, noté *isDecod,* indiquant si un décodage anticipé de l'entité encodée EE 10 par le décodeur 30 a été réalisé lors du premier processus référencé 8 ;
- une structure, notée *présStruct,* qui sera utilisée par le second processus référencé 9 pour restituer l'entité décodée ED 11, si un décodage anticipé, indiqué par *isDecod*=1*,* a été possible lors du premier processus référencé 8. On notera que cette structure *presStruct* dépend, d'une part, de *decodInfo* et d'autre part, d'informations contenues dans l'entité encodée EE 10, selon une fonction de dépendance calculée par le décodeur 30.

Enfin, dans le cas où l'anticipation du décodage par le premier processus référencé 8 n'a pas été possible, c'est-à-dire si *isDecod*=0*,* la mémoire tampon de composition 32 contient l'entité sous forme encodée EE 10.

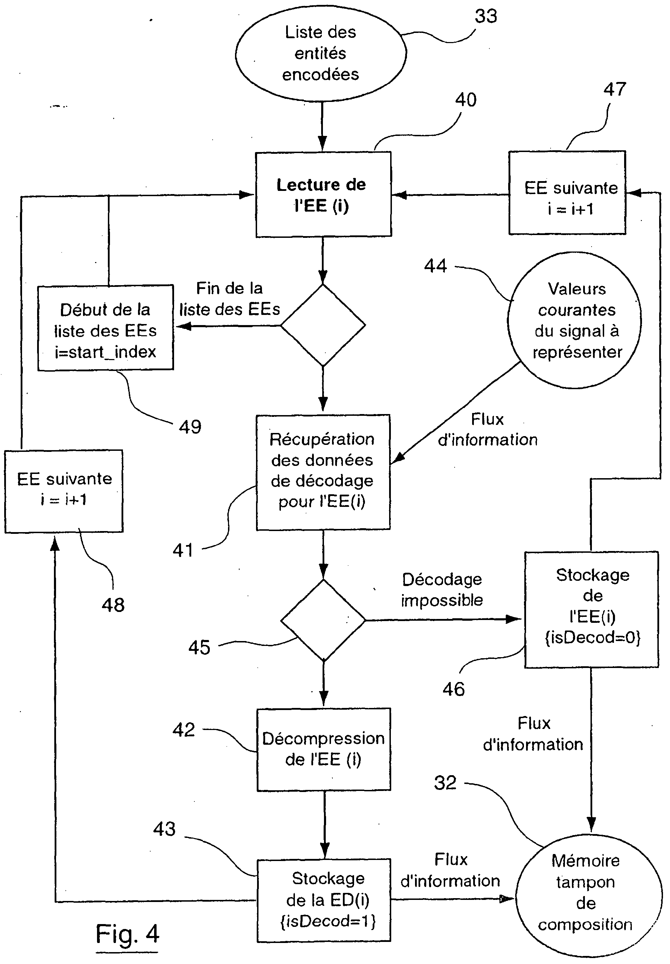

On présente désormais plus en détails, en relation avec la figure 4, le principe de fonctionnement du premier processus référencé 8, destiné à anticiper le décodage des entités encodées EE 10 déjà reçues.

Selon ce premier processus 8, la mémoire tampon de décodage 33, contenant la liste des entités encodées EE 10 est scrutée. Une première entité encodée EE(i) est lue 40, et les données de décodage correspondantes, *decodInfo,* sont récupérées auprès du contexte de composition 44. Ce contexte de composition 44 correspond aux valeurs courantes du signal à représenter : par exemple, dans le cas d'une visualisation de scène graphique, ce contexte de composition correspond aux différents objets présents dans la scène à l'instant courant, et à l'arbre hiérarchique représentatif de leur agencement.

Au cours d'une étape référencée 45, le contexte de composition associé à l'entité EE(i) est comparé au contexte de composition courant, de façon à déterminer si un décodage anticipé de EE(i) par le décodeur 30 est possible.

En prenant un exemple simple de restitution d'un flux de description de scène, comprenant une voiture, le décodage de la trame EE(i) correspondant au volant à l'intérieur de cette voiture, ne pourra être anticipé selon l'invention que si, à l'instant courant du décodage, le contexte de composition correspondant à la voiture est représenté à l'écran.

Si le contexte de composition courant diffère du contexte de composition associé à EE(i), le décodage anticipé par le décodeur 30 est impossible, *isDecod*=0*,* et l'entité encodée EE(i) est stockée 46 dans la mémoire tampon de composition 32.

On passe alors 47 à l'entité encodée EE(i+1) suivante dans la liste 33.

Dans le cas contraire, si le contexte de composition courant coïncide avec le contexte de composition associé à EE(i), et autorise de ce fait un décodage anticipé, EE(i) est décompressée 42, puis stockée 43 sous forme décodée ED(i), associée à la valeur *isDecod*=1*,* dans la mémoire tampon de composition 32.

On passe alors 48 à l'entité encodée suivante EE(i+1) dans la liste 33.

Lorsqu'on arrive en fin de liste, la lecture 40 recommence systématiquement en début 49 de la liste 33 des EE.

Ainsi, pour toutes les EE pour lesquelles un décodage anticipé est possible, ce premier processus référencé 8 génère les données *isDecod, presStruct,* et remplit la mémoire tampon de composition 32 avec les entités décodées ED 11 obtenues. Ce processus référencé 8 travaille en mode asynchrone, et on lui attribue, au sein du dispositif de restitution de la figure 3, une priorité faible, de façon à ne pas utiliser les ressources de calcul nécessaires au dispositif pour assurer une restitution fluide du signal par le second processus référencé 9.

En effet, la définition des estampilles ETC impose au dispositif de restitution de garantir, à l'instant T, la restitution par le second processus 9, de toutes les entités décodées ED dont l'estampille temporelle de composition ETC est inférieure à T. Le second processus 9 doit donc disposer de ressources de calcul suffisantes pour permettre de restituer les entités décodées ED contenues dans la mémoire tampon de composition 32 aussi rapidement que possible.

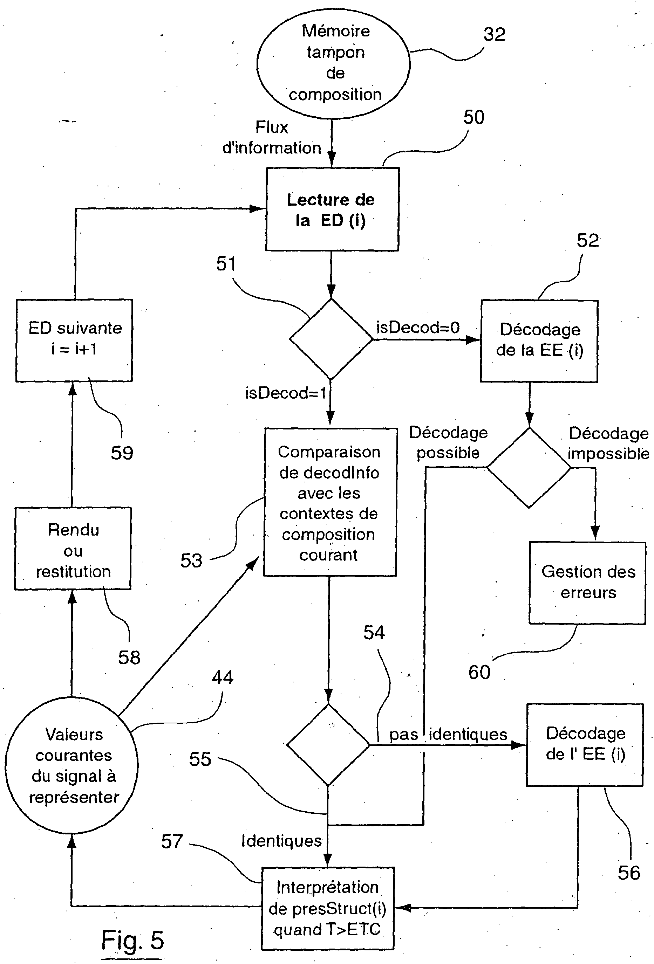

On présente désormais, en relation avec la figure 5, le mode de fonctionnement du second processus de restitution 9.

La mémoire tampon de composition 32 est parcourue de façon à lire (50) successivement les différentes entités décodées ED(i) qu'elle contient. Au cours d'une première étape référencée 51, on analyse la valeur du marqueur *isDecod,* pour déterminer si un décodage anticipé a été réalisé par le décodeur 30 du premier processus référencé 8.

*Si *isDecod*=1*,* on met en oeuvre une comparaison 53 des informations *decodInfo,* stockées dans la mémoire tampon de composition 32 en relation avec l'entité décodée ED(i), avec le contexte de composition courant 44.

La manière dont on récupère les informations de contexte de composition courant, selon ce second processus 9, dépend des différentes implantations possibles du dispositif, et correspond à des techniques classiques, bien connues de l'Homme du Métier, qui ne seront donc pas détaillées plus avant dans le cadre de la présente invention.

Si *decodInfo* diffère (54) du contexte de composition courant, il est nécessaire de réitérer le décodage 56 de l'EE(i), en fonction du contexte de composition courant.

Si en revanche *decodInfo* coïncide (55) avec le contexte de composition courant, la structure *presStruct* est donc valide, et l'entité décodée ED(i) peut être restituée à l'instant indiqué par son estampille temporelle de composition ETC. La structure *presStruct*(i) est interprétée 57, et ED(i) est restituée 58, avant que le processus 9 ne passe à l'Ed suivante 59 de la mémoire tampon de composition 32.

*Si *isDecod*=0*,* l'anticipation du décodage de l'entité considérée n'a pas été possible, il faut donc procéder au décodage 52 de l'entité encodée EE(i). Si ce décodage est possible, en raison d'une conformité entre le contexte de composition courant et le contexte de composition associé à l'EE considérée, on procède alors à l'interprétation 57 de la structure *presStruct* correspondante, et à la restitution 58 de l'entité. Si le décodage n'est pas possible, parce que le contexte de composition courant diffère du contexte de composition associé à l'EE considérée, on met en oeuvre une procédure classique de gestion des erreurs 60. Dans l'exemple précédent d'un flux de description de scène représentatif d'une voiture, le décodage de l'entité représentative du volant est impossible si la voiture ne fait plus partie du contexte de scène, en raison par exemple d'une intervention de l'utilisateur qui l'a supprimée de la scène visualisée.

Selon ce second processus 9, on supprime ensuite l'entité décodée ED 11 de la mémoire tampon de composition 32, car, après restitution, cette entité est désormais obsolète.

On présente désormais rapidement la seconde variante de réalisation de l'invention, dans le cas où l'ordre de décodage des entités encodées EE 10 diffère de l'ordre de composition indiqué par les estampilles temporelles de composition ETC qui leur sont associées.

L'ordre dans lequel les EE sont rangées dans la mémoire tampon de décodage 33 diffère donc de l'ordre de restitution des entités décodées ED. Le premier processus référencé 8, présenté précédemment en relation avec la figure 4, fonctionne alors dans l'ordre de stockage des entités dans la mémoire tampon de décodage 33. Ainsi, si cet ordre de décodage est indiqué par une estampille temporelle de décodage ETD associée à chacune des entités du flux, les indices i affectés aux entités EE(i) dans la figure 4 correspondent aux ETD croissants.

En revanche, la restitution des entités par le second processus référencé 9 nécessite la mise en oeuvre des étapes préalables suivantes :
- on identifie, au sein de la mémoire tampon de composition 32, l'entité présentant la plus petite estampille ETC ;
- dès que l'instant T est supérieur à la plus petite estampille temporelle de composition ETCₘᵢₙ identifiée, on procède à la restitution de la structure presStruct de l'entité décodée ED associée à cette estampille ETCₘᵢₙ, et on supprime l'entité décodée Ed correspondante de la mémoire tampon de composition 32.

On notera que, selon une première sous-variante de réalisation, les entités décodées ED sont rangées dans la mémoire tampon de composition dans l'ordre de décodage, et c'est alors la fonction de restitution du second processus 9 qui a pour rôle de sélectionner l'entité ED présentant la plus petite estampille ETCₘᵢₙ.

Selon une autre sous-variante de réalisation, les entités ED sont stockées dans la mémoire tampon de composition 32 dans l'ordre des estampilles ETC croissantes. La fonction de restitution du second processus 9 reste alors identique à celle qui a été présentée précédemment en relation avec la figure 5 ; en revanche, la fonction de décodage du second processus 9 doit parcourir la mémoire tampon de composition 32 dans l'ordre de décodage indiqué par les estampilles temporelles de décodage ETD croissantes.

On met alors en oeuvre les étapes successives suivantes :
- on identifie, au sein de la mémoire tampon de composition 32, l'entité de valeur *isDecod*=0 présentant la plus petite estampille temporelle de décodage ETDₘᵢₙ ;
- on décode ensuite l'entité encodée EE correspondant à cette estampille ETDₘᵢₙ identifiée ;
- on décode les entités encodées EE successivement, dans l'ordre des estampilles temporelles de décodage ETD, jusqu'à ce que toutes les entités présentent une valeur *isDecod*=1*.*

Le temps passé par le second processus 9 au décodage des entités encodées EE est ainsi fortement réduit, car le maximum d'entités encodées EE possible a déjà été décodé par le décodeur 30 du premier processus 8, ce qui permet d'assurer une excellente fluidité de restitution du signal.

On présente désormais succinctement des exemples d'informations *decodInfo* et *presStruct* qui peuvent être utilisées dans le cadre de la présente invention, dans le cas de décodage de flux MPEG-4/BIFS.

Dans le cas du décodage de flux de type BIFS, l'estampille temporelle de décodage ETD est égale à l'estampille temporelle de composition ETC pour toutes les Entités Encodées EE ; on se trouve donc dans la première variante de réalisation de l'invention décrite précédemment, selon laquelle l'ordre de décodage est celui de restitution.

Le mode de réalisation de l'invention peut être précisé en indiquant, dans ce cas, les valeurs de *decodInfo* et de *presStruct* et en précisant comment *decodInfo* est obtenue.

Suivant la nature de l'Entité Encodée, on obtiendra des valeurs différentes :
- Si l'Entité Encodée est une commande BIFS d'insertion de noeud (telle que définie dans la section 9.3.6.5 ISO/IEC 14496-1:2000(E)), alors :
   - *decodInfo* est la valeur de l'identification du noeud et de la table de décodage correspondant à ce noeud, c'est-à-dire {nodeID, GetNDTFromID(nodeID)} ;
   - *presStruct* est un objet facilement interprétable qui décrit la commande telle qu'elle est définie dans la structure décrite dans la section 9.3.6.5.1 de la norme MPEG-4/System.
- Si l'EE est une commande IndexedValueInsertion, alors :
   - *decodInfo* est la valeur de l'identification du noeud, celle de l'identification du champ du noeud, la valeur du noeud et la valeur du champ correspondant à ce noeud, c'est-à-dire {nodeID, inID, node=GetNodeFromID(nodeID),field= node.field[node.in2all[inID]]};
   - *presStruct* est un objet facilement interprétable qui décrit la commande telle qu'elle est définie dans la structure décrite dans la section 9.3.6.6.1 de la norme MPEG-4/System.
- Si l'EE est une commande IndexedValueDeletion, alors :
   - *deeodInfo* est {nodeID, inID, node=GetNodeFromID(nodeID),field= node.field[node.in2all[inID]]} ;
   - *presStruct* est un objet facilement interprétable qui décrit la commande telle qu'elle est définie dans la structure et est une simple indication de destruction d'une valeur à la position *deletionPosition* obtenue lors du décodage de l'EE.
- Si l'EE est une commande FieldReplacement (décrite dans la section 9.3.6.14 de la norme), alors :
   - *decodInfo* est {nodeID, inID, node=GetNodeFromID(nodeID),field= node.field[node.in2all[inID]]} ;
   - *presStruct* est un objet facilement interprétable qui décrit la commande telle qu'elle est définie dans la structure décrite dans la section 9.3.6.14.1 de la norme.
- Si l'EE est une commande IndexedValueReplacement, alors :
   - *decodInfo* est { nodeID , inID, node=GetNodeFromID(nodeID),field= node.field[node.in2all[inID]]} ;
   - *presStruct* est un objet facilement interprétable qui décrit la commande telle qu'elle est définie dans la position *replacePosition* et la structure décrite dans la section 9.3.6.14.1.
- Si l'EE est une commande SceneReplace, alors :
   - *decodInfo* est vide { }
   - *presStruct* est un objet facilement interprétable qui décrit la commande telle qu'elle est définie dans la structure décrite dans la section 9.3.7.1.1
- Dans tous les autres cas, l'entité encodée EE n'est pas décodée par anticipation.

Ces exemples d'Entités Encodées nécessitant des ressources de décodage et d'interprétation importantes, ils bénéficient particulièrement des avantages de l'invention.

L'invention permet donc d'optimiser le décodage du flux reçu, et présente de nombreux avantages.

Tout d'abord, l'invention permet d'optimiser le processus de décodage sans introduire de besoins en mémoire supplémentaire importants par rapport aux techniques de l'art antérieur. En effet, selon l'invention, seuls deux processus de décodage doivent être lancés en parallèle. L'un des processus est synchrone avec l'horloge servant à la restitution du signal, l'autre processus (dit d'anticipation) fonctionne de manière asynchrone. L'incrément de mémoire suscité selon l'invention par rapport aux techniques de l'art antérieur est inférieur à la taille d'un processus de décodage unique car ces deux processus partagent les mêmes mémoires tampons.

En outre, la technique de l'invention ne peut induire des décodages supplémentaires superflus que si l'anticipation du décodage induit une erreur de décodage. Cette erreur de décodage peut être aisément maîtrisée, car il suffit au décodeur du processus synchrone de comparer les paramètres de début de décodage avec ceux du décodeur qui assure l'anticipation.

La technique de l'invention permet également d'utiliser de façon optimale les ressources de calcul des plates-formes "multi-threadées" (i.e., celles qui permettent de lancer plusieurs tâches logicielles en parallèle). Ceci est essentiel lorsqu'on traite des signaux graphiques tout en répondant à des contraintes de fluidité.

Enfin, la technique de l'invention est parfaitement compatible avec les techniques classiques de décodage. En effet, le fait d'utiliser un décodeur supplémentaire, qui assure une anticipation du décodage, assure une grande flexibilité de scénario d'utilisation et une compatibilité avec le décodage classique des signaux connu de l'art antérieur.

## Revendications

1. Procédé de restitution, sur au moins un terminal client, d'au moins un flux de description de scène comprenant une pluralité d'entités encodées, associées chacune à au moins une estampille temporelle de composition, ledit procédé comprenant des étapes de :
- décodage (8) desdites entités encodées, tenant compte d'une information d'ordre de décodage associée à au moins certaines desdites entités encodées, de façon à obtenir une pluralité d'entités décodées ;
- composition (9) desdites entités décodées, aux instants définis par lesdites estampilles temporelles de composition,
lesdites étapes de décodage (8) et de composition (9) étant mises en oeuvre de manière asynchrone,
**caractérisé en ce que**, pour l'une au moins desdites entités encodées, ladite étape de décodage comprend une étape de calcul au moins partiel d'une structure à restituer associée à ladite entité décodée correspondante,
et **en ce que** ladite étape de décodage est anticipée par rapport à ladite estampille temporelle de composition, si ladite structure à restituer coïncide avec les différents objets présents dans la scène à un instant courant et avec un arbre hiérarchique représentatif d'un agencement desdits objets.

2. Procédé de restitution selon la revendication 1, **caractérisé en ce que** lesdites entités décodées par anticipation sont mémorisées par ledit terminal client jusqu'à ladite étape de composition.

3. Procédé de restitution selon la revendication 1, **caractérisé en ce que** si ladite structure à restituer ne coïncide pas avec les différents objets présents dans la scène à un instant courant et avec l'arbre hiérarchique représentatif d'un agencement desdits objets, ladite entité encodée est mémorisée dans ledit terminal client,
et **en ce que** ladite étape de décodage est mise en oeuvre audit instant défini par ladite estampille temporelle de composition associée.

4. Procédé de restitution selon l'une quelconque des revendications 1 et 2, **caractérisé en ce que**, pour au moins certaines desdites entités décodées par anticipation, il réitère une comparaison entre ladite structure à restituer et les différents objets présents dans la scène à un instant courant et l'arbre hiérarchique représentatif d'un agencement desdits objets, préalablement à ladite étape de composition, et **en ce que** ladite étape de composition est mise en oeuvre lorsque ladite comparaison indique que ladite structure à restituer coïncide avec les différents objets présents dans la scène à un instant courant et avec l'arbre hiérarchique représentatif d'un agencement desdits objets.

5. Procédé de restitution selon la revendication 4, **caractérisé en ce que**, lorsque ladite structure à restituer rie coïncide pas avec les différents objets présents dans la scène à un instant courant et avec l'arbre hiérarchique représentatif d'un agencement desdits objets, ledit procédé met en oeuvre une étape de gestion d'erreurs.

6. Procédé de restitution l'une quelconque des revendications 1 à 5, **caractérisé en ce que** ladite information d'ordre de décodage est une estampille temporelle de décodage.

7. Procédé de restitution selon l'une quelconque des revendications 1 à 6, **caractérisé en ce que** le format desdites entités encodées est de type format de description de scène BIFS.

8. Dispositif de restitution d'au moins un flux de description de scène comprenant une pluralité d'entités encodées, associées chacune à au moins une estampille temporelle de composition, ledit dispositif comprenant :
- des moyens de décodage desdites entités encodées, tenant compte d'une information d'ordre de décodage associée à au moins certaines desdites entités encodées, permettant d'obtenir une pluralité d'entités décodées ;
- des moyens de composition desdites entités décodées, mis en oeuvre aux instants définis par lesdites estampilles temporelles de composition ,
lesdits moyens de décodage et de composition fonctionnant de manière asynchrone,
**caractérisé en ce que**, pour l'une au moins desdites entités encodées,
lesdits moyens de décodage comprennent des moyens de calcul au moins partiel d'une structure à restituer associée à ladite entité décodée correspondante,
et **en ce que** lesdits moyens de décodage sont configurés pour décoder ladite entité encodée préalablement à ladite estampille temporelle de composition, si ladite structure à restituer coïncide avec les différents objets présents dans la scène à un instant courant et avec un arbre hiérarchique représentatif d'un agencement desdits objets.

9. Dispositif de restitution selon la revendication 8, **caractérisé en ce qu'**il comprend en outre :
- une mémoire tampon de décodage, dans laquelle lesdites entités encodées sont stockées en ordre croissant de décodage ;
- une mémoire tampon de composition, dans laquelle sont mémorisées lesdites entités décodées.

10. Dispositif selon la revendication 9, **caractérisé en ce que** lesdites entités décodées sont mémorisées dans ladite mémoire tampon de composition en ordre croissant d'estampille temporelle de composition.

11. Dispositif selon la revendication 9, **caractérisé en ce que** lesdites entités décodées sont mémorisées dans ladite mémoire tampon de composition en ordre croissant de décodage.

12. Système de transmission d'au moins un flux de description de scène d'un serveur de données vers au moins un terminal client,
ledit serveur comprenant des moyens de codage dudit flux de description de scène, sous la forme d'une pluralité d'entités encodées, associées chacune à au moins une estampille temporelle de composition,
ledit terminal client comprenant :
- des moyens de décodage desdites entités encodées, tenant compte d'une information d'ordre de décodage associée à au moins certaines desdites entités encodées, permettant d'obtenir une pluralité d'entités décodées ;
- des moyens de composition desdites entités décodées, mis en oeuvre aux instants définis par lesdites estampilles temporelles de composition ,
lesdits moyens de décodage et de composition fonctionnant de manière asynchrone,
**caractérisé en ce que**, pour l'une au moins desdites entités encodées,
lesdits moyens de décodage comprennent des moyens de calcul au moins partiel d'une structure à restituer associée à ladite entité décodée correspondante,
et **en ce que** lesdits moyens de décodage sont configurés pour décoder ladite entité encodée préalablement à ladite estampille temporelle de composition, si ladite structure à restituer coïncide avec les différents objets présents dans la scène à un instant courant et avec un arbre hiérarchique représentatif d'un agencement desdits objets.

13. Signal représentatif d'un flux de description de scène destiné à être restitué par au moins un dispositif de restitution selon l'une quelconque des revendications 8 à 11, ledit signal étant disponible en sortie desdits moyens de décodage et alimentant lesdits moyens de composition dudit dispositif, **caractérisé en ce qu'**il comprend une pluralité d'entités dudit flux, comprenant chacune :
- une estampille temporelle de composition ;
- un marqueur *isdecod,* indiquant si ladite entité a été décodée de manière anticipée ;
et **en ce que**, lorsque ledit marqueur *isdecod* prend une première valeur, ladite entité est sous forme encodée et, lorsque ledit marqueur *isdecod* prend une seconde valeur, ladite entité est sous forme décodée et comprend en outre :
- des informations, appelées *presStruct,* relatives à une structure de restitution de ladite entité ;
- des informations, appelées *decodInfo,* relatives au décodage de ladite entité.

## Patentansprüche

1. Verfahren zur Wiedergabe, auf mindestens einem Client-Endgerät, mindestens eines Szenenbeschreibungsstroms, der eine Vielzahl von codierten Entitäten enthält, die je mindestens einem Kompositions-Zeitstempel zugeordnet sind, wobei das Verfahren die folgenden Schritte enthält:
- Decodieren (8) der codierten Entitäten, unter Berücksichtigung einer Decodier-Befehlsinformation, die mindestens bestimmten der codierten Entitäten zugeordnet ist, um eine Vielzahl von decodierten Entitäten zu erhalten;
- Komposition (9) der decodierten Entitäten in den von den Kompositions-Zeitstempeln definierten Augenblicken,
wobei die Decodier- (8) und Kompositionsschritte (9) asynchron durchgeführt werden,
**dadurch gekennzeichnet, dass** für mindestens eine der codierten Entitäten der Decodierschritt einen Schritt einer mindestens teilweisen Berechnung einer der entsprechenden decodierten Entität zugeordneten wiederzugebenden Struktur enthält, und dass der Decodierschritt bezüglich des Kompositions-Zeitstempels vorweggenommen wird, wenn die wiederzugebende Struktur mit den in der Szene in einem laufenden Augenblick vorhandenen verschiedenen Gegenständen und mit einem Hierarchiebaum übereinstimmt, der für eine Anordnung der Gegenstände repräsentativ ist.

2. Wiedergabeverfahren nach Anspruch 1, **dadurch gekennzeichnet, dass** die im Voraus decodierten Entitäten vom Client-Endgerät bis zum Kompositionsschritt gespeichert werden.

3. Wiedergabeverfahren nach Anspruch 1, **dadurch gekennzeichnet, dass**, wenn die wiederzugebende Struktur nicht mit den verschiedenen in einem laufenden Augenblick in der Szene vorhandenen Gegenständen und mit dem für eine Anordnung der Gegenstände repräsentativen Hierarchiebaum übereinstimmt, die codierte Entität im Client-Endgerät gespeichert wird,
und dass der Decodierschritt in dem vom zugeordneten Kompositions-Zeitstempel definierten Augenblick durchgeführt wird.

4. Wiedergabeverfahren nach einem der Ansprüche 1 und 2, **dadurch gekennzeichnet, dass** es für mindestens bestimmte der im Voraus decodierten Entitäten einen Vergleich zwischen der wiederzugebenden Struktur und den verschiedenen in einem laufenden Augenblick in der Szene vorhandenen Gegenständen und dem für eine Anordnung der Gegenstände repräsentativen Hierarchiebaum vor dem Kompositionsschritt wiederholt, und dass der Kompositionsschritt durchgeführt wird, wenn der Vergleich anzeigt, dass die wiederzugebende Struktur mit den verschiedenen in einem laufenden Augenblick in der Szene vorhandenen Gegenständen und mit dem für eine Anordnung der Gegenstände repräsentativen Hierarchiebaum übereinstimmt.

5. Wiedergabeverfahren nach Anspruch 4, **dadurch gekennzeichnet, dass**, wenn die wiederzugebende Struktur nicht mit den verschiedenen in einem laufenden Augenblick in der Szene vorhandenen Gegenständen und mit dem für eine Anordnung der Gegenstände repräsentativen Hierarchiebaum übereinstimmt, das Verfahren einen Schritt der Fehlerverwaltung durchführt.

6. Wiedergabeverfahren nach einem der Ansprüche 1 bis 5, **dadurch gekennzeichnet, dass** die Decodierbefehlinformation ein Decodier-Zeitstempel ist.

7. Wiedergabeverfahren nach einem der Ansprüche 1 bis 6, **dadurch gekennzeichnet, dass** das Format de codierten Entitäten von der Art Szenenbeschreibungsformat BIFS ist.

8. Vorrichtung zur Wiedergabe mindestens eines Szenenbeschreibungsstroms, der eine Vielzahl von codierten Entitäten enthält, die je mindestens einem Kompositions-Zeitstempel zugeordnet sind, wobei die Vorrichtung enthält:
- Decodiereinrichtungen der codierten Entitäten, unter Berücksichtigung einer Decodier-Befehlsinformation, die mindestens bestimmten der codierten Entitäten zugeordnet ist, was den Erhalt einer Vielzahl von decodierten Entitäten ermöglicht;
- Kompositionseinrichtungen der decodierten Entitäten, die in den von den Kompositions-Zeitstempeln definierten Augenblicken angewendet werden,
wobei die Decodier- und Kompositionseinrichtungen asynchron arbeiten,
**dadurch gekennzeichnet, dass** für mindestens eine der codierten Entitäten
die Decodiereinrichtungen Einrichtungen zur zumindest teilweisen Berechnung einer der entsprechenden decodierten Entität zugeordneten wiederzugebenden Struktur enthalten,
und dass die Decodiereinrichtungen konfiguriert sind, um die codierte Entität vor dem Kompositions-Zeitstempel zu decodieren, wenn die wiederzugebende Struktur mit den in einem laufenden Augenblick in der Szene vorhandenen verschiedenen Gegenständen und mit einem Hierarchiebaum übereinstimmt, der für eine Anordnung der Gegenstände repräsentativ ist.

9. Wiedergabevorrichtung nach Anspruch 8, **dadurch gekennzeichnet, dass** sie außerdem enthält:
- einen Decodier-Pufferspeicher, in dem die codierten Entitäten in ansteigender Decodierreihenfolge gespeichert sind;
- einen Kompositions-Pufferspeicher, in dem die decodierten Entitäten gespeichert sind.

10. Vorrichtung nach Anspruch 9, **dadurch gekennzeichnet, dass** die decodierten Entitäten im Kompositions-Pufferspeicher in ansteigender Kompositions-Zeitstempel-Reihenfolge gespeichert sind.

11. Vorrichtung nach Anspruch 9, **dadurch gekennzeichnet, dass** die decodierten Entitäten im Kompositions-Pufferspeicher in ansteigender Decodierreihenfolge gespeichert sind.

12. System zur Übertragung mindestens eines Szenenbeschreibungsstroms von einem Datenserver zu mindestens einem Client-Endgerät,
wobei der Server Codiereinrichtungen des Szenenbeschreibungsstroms in Form einer Vielzahl von codierten Entitäten enthält, die je mindestens einem Kompositions-Zeitstempel zugeordnet sind, wobei das Client-Endgerät enthält:
- Decodiereinrichtungen der codierten Entitäten, unter Berücksichtigung einer Decodier-Befehlsinformation, die mindestens bestimmten der codierten Entitäten zugeordnet ist, was es ermöglicht, eine Vielzahl von decodierten Entitäten zu erhalten;
- Kompositionseinrichtungen der decodierten Entitäten, die in den von den Kompositions-Zeitstempeln definierten Augenblicken angewendet werden,
wobei die Decodier- und Kompositionseinrichtungen asynchron arbeiten,
**dadurch gekennzeichnet, dass** für mindestens eine der codierten Entitäten
die Decodiereinrichtungen Einrichtungen zur zumindest teilweisen Berechnung einer der entsprechenden decodierten Entität zugeordneten wiederzugebenden Struktur enthalten,
und dass die Decodiereinrichtungen konfiguriert sind, die codierte Entität vor dem Kompositions-Zeitstempel zu decodieren, wenn die wiederzugebende Struktur mit den in einem laufenden Augenblick in der Szene vorhandenen verschiedenen Gegenständen und mit einem Hierarchiebaum übereinstimmt, der für eine Anordnung der Gegenstände repräsentativ ist.

13. Signal, das für einen Szenenbeschreibungsstrom repräsentativ ist, der dazu bestimmt ist, durch mindestens eine Wiedergabevorrichtung nach mindestens einem der Ansprüche 8 bis 11 wiedergegeben zu werden, wobei das Signal am Ausgang der Decodiereinrichtungen zur Verfügung steht und die Kompositionseinrichtungen der Vorrichtung versorgt,
**dadurch gekennzeichnet, dass** es eine Vielzahl von Entitäten des Stroms enthält, die je enthalten:
- einen Kompositions-Zeitstempel;
- einen Marker *isdecod,* der anzeigt, ob die Entität im Voraus decodiert wurde;
und dass, wenn der Marker *isdecod* einen ersten Wert annimmt, die Entität in codierter Form ist, und wenn der Marker *isdecod* einen zweiten Wert annimmt, die Entität in decodierter Form ist und außerdem enthält:
- Informationen, *presStruct* genannt, bezüglich einer Wiedergabestruktur der Entität;
- Informationen, *decodInfo* genannt, bezüglich der Decodierung der Entität.

## Claims

1. Method of restitution, on at least one client terminal, of at least one scene description stream comprising a plurality of encoded entities, each associated with at least one composition time stamp, said method comprising steps of:
- decoding (8) said encoded entities, taking account of an item of decoding order information associated with at least certain of said encoded entities, in such a way as to obtain a plurality of decoded entities;
- composition (9) of said decoded entities, at the instants defined by said composition time stamps,
said decoding (8) and composition (9) steps being implemented asynchronously,
**characterized in that**, for at least one of said encoded entities, said decoding step comprises a step of at least partial calculation of a structure to be restituted associated with said corresponding decoded entity,
and **in that** said decoding step is anticipated with respect to said composition time stamp, if said structure to be restituted coincides with the various objects present in the scene at a current instant and with a hierarchical tree representative of an arrangement of said objects.

2. Method of restitution according to Claim 1, **characterized in that** said entities decoded by anticipation are stored by said client terminal until said composition step.

3. Method of restitution according to Claim 1, **characterized in that** if said structure to be restituted does not coincide with the various objects present in the scene at a current instant and with the hierarchical tree representative of an arrangement of said objects, said encoded entity is stored in said client terminal,
and **in that** said decoding step is implemented at said instant defined by said associated composition time stamp.

4. Method of restitution according to any one of Claims 1 and 2, **characterized in that**, for at least certain of said entities decoded by anticipation, it repeats a comparison between said structure to be restituted and the various objects present in the scene at a current instant and the hierarchical tree representative of an arrangement of said objects, prior to said composition step, and **in that** said composition step is implemented when said comparison indicates that said structure to be restituted coincides with the various objects present in the scene at a current instant and with the hierarchical tree representative of an arrangement of said objects.

5. Method of restitution according to Claim 4, **characterized in that**, when said structure to be restituted does not coincide with the various objects present in the scene at a current instant and with the hierarchical tree representative of an arrangement of said objects, said method implements a step of error management.

6. Method of restitution according to any one of Claims 1 to 5, **characterized in that** said item of decoding order information is a decoding time stamp.

7. Method of restitution according to any one of Claims 1 to 6, **characterized in that** the format of said encoded entities is of BIFS scene description format type.

8. Device for restitution of at least one scene description stream comprising a plurality of encoded entities, each associated with at least one composition time stamp, said device comprising:
- means for decoding said encoded entities, taking account of an item of decoding order information associated with at least certain of said encoded entities, making it possible to obtain a plurality of decoded entities;
- means for composition of said decoded entities, implemented at the instants defined by said composition time stamps,
said decoding and composition means operating asynchronously,
**characterized in that**, for at least one of said encoded entities,
said decoding means comprise means for at least partial calculation of a structure to be restituted associated with said corresponding decoded entity,
and **in that** said decoding means are configured to decode said encoded entity prior to said composition time stamp, if said structure to be restituted coincides with the various objects present in the scene at a current instant and with a hierarchical tree representative of an arrangement of said objects.

9. Device for restitution according to Claim 8, **characterized in that** it furthermore comprises:
- a decoding buffer memory, in which said encoded entities are stored in ascending order of decoding;
- a composition buffer memory, in which said decoded entities are stored.

10. Device according to Claim 9, **characterized in that** said decoded entities are stored in said composition buffer memory in ascending order of composition time stamp.

11. Device according to Claim 9, **characterized in that** said decoded entities are stored in said composition buffer memory in ascending order of decoding.

12. System for transmitting at least one scene description stream from a data server to at least one client terminal,
said server comprising means for coding said scene description stream, in the form of a plurality of encoded entities, each associated with at least one composition time stamp,
said client terminal comprising:
- means for decoding said encoded entities, taking account of an item of decoding order information associated with at least certain of said encoded entities, making it possible to obtain a plurality of decoded entities;
- means for composition of said decoded entities, implemented at the instants defined by said composition time stamps,
- said decoding and composition means operating asynchronously,
**characterized in that**, for at least one of said encoded entities,
said decoding means comprise means of at least partial calculation of a structure to be restituted associated with said corresponding decoded entity,
and **in that** said decoding means are configured to decode said encoded entity prior to said composition time stamp, if said structure to be restituted coincides with the various objects present in the scene at a current instant and with a hierarchical tree representative of an arrangement of said objects.

13. Signal representative of a scene description stream intended to be restituted by at least one restitution device according to any one of Claims 8 to 11, said signal being available as output of said decoding means and supplying said means of composition of said device,
**characterized in that** it comprises a plurality of entities of said stream, each comprising:
- a composition time stamp;
- a marker *isdecod,* indicating whether said entity has been decoded in an anticipated manner;
and **in that**, when said marker *isdecod* takes a first value, said entity is in encoded form and, when said marker *isdecod* takes a second value, said entity is in decoded form and furthermore comprises:
- information, called *presStruct,* relating to a restitution structure of said entity;
- information, called *decodInfo,* relating to the decoding of said entity.
